Europäisches Patentamt

European Patent Office

Office européen des brevets

(11) Publication number: 0 213 756
A2

# (12) EUROPEAN PATENT APPLICATION

(21) Application number: 86305893.9

(51) Int. Cl.⁴: **A41D 31/02**

(22) Date of filing: 31.07.86

(30) Priority: 02.08.85 GB 8519463

(43) Date of publication of application:
11.03.87 Bulletin 87/11

(84) Designated Contracting States:
AT BE CH DE FR GB IT LI LU NL SE

(71) Applicant: DRG (UK) LIMITED
1 Redcliffe Street
Bristol Avon, BS99 7QY(GB)

(72) Inventor: McCarthy, Allan Robert
4 Abbey Close Abbey Park
Keynsham Bristol(GB)
Inventor: Wotten, David Edward Mudge
66 Roman Way Stoke Bishop
Bristol, BS9 1SS(GB)

(74) Representative: Stuart, Ian Alexander et al
MEWBURN ELLIS & CO. 2/3 Cursitor Street
London EC4A 1BQ(GB)

(54) Protective clothing made from welded mutilayer sheet material incorporating a barrier layer.

(57) A garment with barrier properties, e.g. a glove for chemical workers, is formed of multilayer material having a strong layer (e.g. polyester), a metal barrier layer (e.g. aluminium vapour-deposited on the polyester) and a heat-sealable layer (e.g. an ionomer or polyethylene) whereby portions of the material are welded to each other (or to different materials) to form the garment.

EP 0 213 756 A2

# PROTECTIVE CLOTHING MADE FROM WELDED MULTILAYER SHEET MATERIAL INCORPORATING A BARRIER LAYER

This invention relates to protective clothing, and is especially applicable to clothing, such as gloves, for use when dealing with corrosive, poisonous or otherwise harmful liquids.

Polyethylene protective gloves are well known. Conventionally they are made by applying a hot wire around the desired outline of the gloves to a pair of superimposed polyethylene sheets. The hot wire locally melts the polyethylene sheets, thereby producing a cut through the sheets around the said outline, and also at the same time a molten bead around the cut edge which welds the sheets together. One disadvantage of this is that polyethylene, or other plastics film material which can be similarly heated, may not have sufficient barrier qualities for the intended use, for example with certain types of solvent.

The present invention provides a garment made at least in part from multilayer sheet material which comprises a barrier layer sandwiched between a reinforcing outer layer and a weldable inner layer, the garment having at least one welded connection between an inner layer of said multilayer sheet material and a portion of plastics material which is the same as or different from said multilayer sheet material. Thus the garment may have a garment made at least in part by welding together the contacting inner layers of superimposed sheets of the laminate material.

A typical laminate comprises a metal barrier layer, such as aluminium, sandwiched between a reinforcing outer layer of plastics, such as polyester film, and a heatsealable inner layer of thermoplastic material such as polyethylene, certain polyesters, or an ionomer such as SURLYN (a trademark of DuPont). Other heat-sealable inner layers could be used, such as heat-sealable lacquer coatings. The welding can be effected by the direct or radiant application of heat, or by induction, high frequency or radio frequency heating. The presence of a metal barrier layer may make induction heating particularly suitable.

The metal barrier layer may take the form of a preformed metal foil to which is laminated the other layers. For example, the foil may be laminated to a polyester outer layer by means of a polyurethane adhesive, and the other side of the foil coated with a heat-sealable lacquer. Alternatively it may be formed by application of a composition such as an ink containing metallic particles in a vehicle; or by vapour deposition of metal on the surface of one of the other layers, preferably the reinforcing outer layer. Surprisingly, such a deposited layer can, though thin, provide an effective barrier. Furthermore it is more flexible and less prone to cracking than a preformed metal foil.

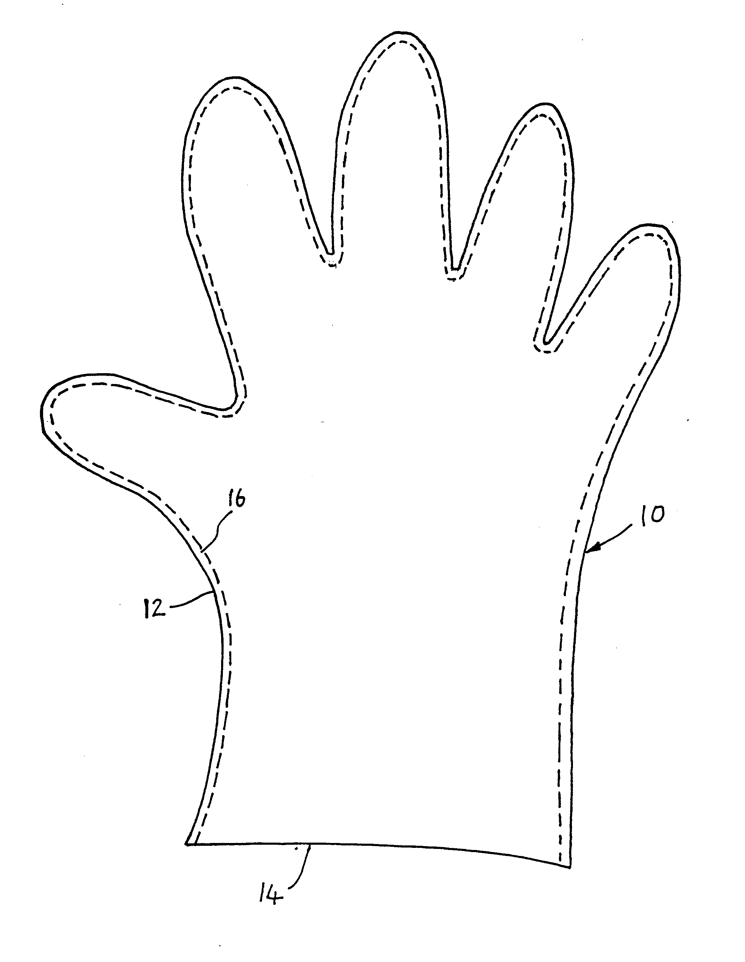

In the accompanying drawing a glove 10 is formed from two superimposed sheets of laminate material. Each sheet is made from metallised - (aluminised) Melinex (trademark) polyester film, the polyester film being 17g.s.m.. The vapour-deposited metal layer is coated with a heatsealable layer, preferably of SURLYN, suitably applied by extrusion coating at 34 g.s.m.. Alternative layer materials include polyethylene and lacquer.

The two sheets are superimposed so that the sealable layers are in contact, and they are heat sealed along the outline of a glove, forming a weld line suitably 3-5mm wide. The sealing temperature may be in the range 100-180°C. They are then cut on the outline 12 of the glove. (Alternatively, welding and cutting may be a single operation using a profiled sealer/cutter. This can be a cutting die which incorporates a heating element just inwardly of the cutting edge on all sides except the glove opening edge 14. This die remains in contact with the material for a time sufficient for the heating element to weld the two sheets together around the remaining periphery 16 by means of the sealable coating.)

The barrier properties of a laminate of metallised polyester and (heat-sealable) polyethylene, usable in the present invention, were compared with those of conventional gloves of (1) polyethylene, (2) PVC, (3) rubber and (4) synthetic nitrile rubber; and also with a polyester/polyethylene sheet. The permeabilities to the following solvents were assessed: dichloromethane; trichloroethylene; toluene; MEK (2-ketobutane); butyl acetate; pyridine; and tetrahydrofuran. In each case the metallised laminate was found to have far the best barrier properties.

Other protective garments may be similarly formed, for example hats, aprons and over-trousers. In some cases, for example aprons, there may be no seams, but a single sheet of laminate material with suitable string or straps attached where appropriate by sealing. Particularly for forming garments such as trousers, more robust materials may be desired. These may be provided by including a further layer e.g. between the metal and the sealable layer. This may be, for example, VALERON (trademark) or spunbonded polyolefin such as TYVEK (trademark).

Such materials may be connected to metallised polyester by means of a 2-part curing adhesive, and receive a sealable layer of SURLYN on the opposite face.

## Claims

1. A garment made at least in part from multilayer sheet material which comprises a barrier layer sandwiched between a reinforcing outer layer and a weldable inner layer, the garment having at least one welded connection between an inner layer of said multilayer sheet material and a portion of plastics material which is the same as or different from said multilayer sheet material.

2. A garment according to claim 1 having at least one connection which is a seam formed by welding together the contacting inner layers of superimposed sheets of the multilayer sheet material.

3. A garment according to claim 1 or 2, wherein the barrier layer comprises a metal barrier layer.

4. A garment according to claim 3, wherein the metal barrier layer is a preformed metal foil to which is laminated the other layers.

5. A garment according to claim 4, wherein the foil is laminated to a polyester outer layer by means of a polyurethane adhesive, and the other side of the foil is coated with a heat-sealable lacquer.

6. A garment according to claim 3, wherein the metal barrier layer has been formed by vapour deposition of metal on the surface of one of the other layers.

7. A garment according to claim 6, wherein said vapour deposition of metal was onto a surface of the reinforcing outer layer.

8. A garment according to any preceding claim, wherein the reinforcing outer layer comprises a polyester film.

9. A garment according to any preceding claim, wherein the weldable inner layer comprises a layer of polyethylene or polyester film.

10. A garment according to any preceding claim, wherein the weldable inner layer comprises a heat-sealable lacquer coating.

11. A garment according to any preceding claim, which is a glove.

12. A method of producing a garment according to any preceding claim, wherein a said connection is produced by welding employing the direct or radiant application of heat, or induction, high frequency or radio frequency heating.

13. A method according to claim 12, wherein the barrier layer comprises a metal barrier layer, and a said connection is produced by welding employing induction heating.